# EUROPÄISCHE PATENTSCHRIFT

(11) **EP 1 738 568 B1**
(45) Veröffentlichungstag und Bekanntmachung des Hinweises auf die Patenterteilung: **07.09.2016**
(21) Anmeldenummer: 05742310.5
(22) Anmeldetag: 14.04.2005
(51) Int. Cl.: H04M 1/253, H04M 1/56, H04M 1/57, H04M 1/65, H04M 1/652, H04M 3/533

(54) **TELEKOMMUNIKATIONSVERBINDUNG ZWISCHEN ZWEI TELEKOMMUNIKATIONSGERÄTEN MIT ÜBERTRAGUNG VON ANZEIGE-STEUERBEFEHLEN IN EINEM SEPARATEN DATENKANAL**
TELECOMMUNICATIONS LINK BETWEEN TWO TELECOMMUNICATIONS DEVICES COMPRISING THE TRANSMISSION OF DISPLAY CONTROL COMMANDS IN A SEPARATE DATA CHANNEL
LIAISON DE TELECOMMUNICATIONS ENTRE DEUX APPAREILS DE TELECOMMUNICATIONS A TRANSMISSION D'INSTRUCTIONS DE CONTROLE D'AFFICHAGE DANS UN CANAL DE DONNEES SEPARE

(30) Priorität: 19.04.2004 DE 102004019584
(43) Veröffentlichungstag der Anmeldung: 03.01.2007
(73) Patentinhaber: Mitel Deutschland GmbH, 10997 Berlin (DE)
(72) Erfinder: HERTEL, Andreas, 21397 Barendorf (DE); KRÖGER, H.-Dieter, 24558 Wakendorf II (DE)
(74) Vertreter: Derry, Paul Stefan
(86) Internationale Anmeldenummer: PCT/DE2005/000671
(87) Internationale Veröffentlichungsnummer: WO 2005/101800

(56) Entgegenhaltungen:
- EP-A- 0 590 862
- EP-A- 1 381 212
- DE-A1- 19 630 456
- US-A1- 2002 154 745

## Beschreibung

Die Erfindung bezieht sich auf ein Verfahren mit den Merkmalen gemäß dem Oberbegriff des Anspruchs 1.

Aus der U.S. Offenlegungsschrift US 2002/154745 A1 sind ein Verfahren und ein Anrufbeantworter mit den Merkmalen gemäß dem Oberbegriff der Ansprüche 1 bzw. 11 bekannt. Die US-Schrift offenbart ein Verfahren, bei dem dem Inhaber einer Mailbox auf einem Display angezeigt wird, von welchen Anrufern Nachrichten auf die Mailbox gesprochen worden sind und welche Nachrichtendauer die jeweiligen Nachrichten aufweisen.

Die deutsche Offenlegungsschrift DE 196 30 456 offenbart ein Verfahren zum Übertragen von Daten über ein ISDN-Netz. Es wird vorgeschlagen, allein den D-Kanal des ISDN-Netzes für eine Signalübertragung zu benutzen, ohne dass es zu einem parallelen kostenpflichtigen Verbindungsaufbau über die B-Kanäle kommt.

Die europäische Offenlegungsschrift EP 1 381 212 offenbart, dass drahtgebundene Telekommunikationsendgeräte mit WAP-Technologie ausgestattet werden können, wie dies bereits bei Mobilfunkendgeräten bekannt ist.

Es ist außerdem bekannt, dass Telekommunikationsendgeräte Audiosignale nach dem CCITT G. 711 Standard (CCITT: Consultative Committee for International Telegraphy and Telephony) digitalisieren und die in dieser Weise gebildeten Sprachinformationen im Falle einer ISDN-Verbindung in einem sogenannten B-Kanal übertragen. Parallel dazu übermitteln die Telekommunikationsendgeräte in einem separaten Datenkanal, kurz D-Kanal genannt, zusätzlich Datensignale mit Informationen, die der Verwaltung der Kommunikationsverbindung dienen.

Darüber hinaus ist es bekannt, dass Telekommunikationsgeräte untereinander Datenverbindungen eingehen können. Hierzu übermitteln die Telekommunikationsgeräte in dem Sprachkanal (B-Kanal) anstelle von digital kodierten Audiosignalen Digitalwerte, die eine Datenkodierung darstellen. Die im separaten Datenkanal (D-Kanal), übertragenen Informationen unterscheiden sich dabei grundsätzlich nicht vom "Telefoniefall", also dem Fall einer "normalen" Übermittlung von Audiosignalen.

Daneben gibt es in GSM-Netzen (GSM: Global System for Mobile Communications) das sogenannte GPRS-Verfahren (GPRS: General Packet Radio Service), bei dem Datenverbindungen auf vom Internet her bekannten Internetprotokollen "TCP/IP" basieren. Hierbei hat sich zur Darstellung von Bildschirminhalten bzw. Display-Inhalten die "Wireless Markup Language" (WML)-Sprache durchgesetzt, mit der mittels des bekannten "Wire-less Application Protocol" (WAP)-Protokoll Bilddaten übermittelt werden. Für eine entsprechende Datenverbindung sind sogenannte WAP-fähige Telekommunikationsendgeräte notwendig; zur Herstellung einer Datenverbindung muss den beteiligten Telekommunikationsendgeräten stets die jeweilige IP-Adresse des Telekommunikationspartners bekannt sein.

Der Erfindung liegt die Aufgabe zugrunde, ein Verfahren zum Betreiben einer Telekommunikationsverbindung anzugeben, das besonders benutzerfreundlich und komfortabel ist (1)

Diese Aufgabe wird ausgehend von einem Verfahren der eingangs angegebenen Art erfindungsgemäß durch die kennzeichnenden Merkmale des Anspruchs 1 gelöst.
(1) und die Eigenschaften der beteiligten Telekommunikationsgeräte berücksichtigt. Vorteilhafte Ausgestaltungen des erfindungsgemäßen Verfahrens sind in Unteransprüchen angegeben.

Ein wesentlicher Vorteil des erfindungsgemäßen Verfahrens besteht darin, dass dieses einen besonders hohen Benutzungskomfort gewährleistet, weil zusätzlich zu Sprachinformationen auch Anzeige-Steuerbefehle übertragen werden können. Beispielsweise kann der Name des Anrufers übertragen werden.

Ein weiterer wesentlicher Vorteil des erfindungsgemäßen Verfahrens besteht darin, dass der Sprachkanal von der zusätzlichen Datenübertragung nicht betroffen ist; damit wird gewährleistet, dass die Sprachinformationen in üblicher Weise ungestört - also mit der gesamten zur Verfügung stehenden Audio-Bandbeite - übertragen werden können.

Ein dritter wesentlicher Vorteil des erfindungsgemäßen Verfahrens besteht darin, dass zur Übertragung der Anzeige-Steuerbefehle keine IP-Adressen bekannt sein müssen, da nämlich die Übertragung der Anzeige-Steuerbefehle in dem separaten Datenkanal erfolgt, nachdem der Verbindungsaufbau in üblicher Weise erfolgt ist.

Das erfindungsgemäße Verfahren wird bei einer Kommunikationsverbindung eingesetzt werden, bei dem eines der beiden beteiligten Telekommunikationsgeräte durch einen Anrufbeantworter bzw. durch ein eine Anrufbeantworterfunktion wahrnehmendes Telekommunikationsgerät gebildet ist; die Anrufbeantworterfunktion kann beispielsweise auch netzbetreiberseitig bereitgestellt sein ("Mailbox"). Das als Anrufbeantworter arbeitende Telekommunikationsgerät kann somit zusätzlich zu den Sprachinformationen noch weitere Informationen als Display-Daten an den Anrufer übermitteln: Beispielsweise können der Name des Inhabers des Anrufbeantworters bzw. der "Mailbox", die jeweilige Uhrzeit, das Datum sowie im Falle eines Aufsprechens von Audiosignalen auf den Anrufbeantworter bzw. auf die "Mailbox" die jeweils zur Verfügung stehende Restaufnahmezeit angezeigt werden. Der Anrufer weiß damit, dass er mit dem richtigen Anrufbeantworter bzw. mit der richtigen Mailbox verbunden ist und wie viel Zeit ihm jeweils noch verbleibt, um seine Sprachnachricht auf den Anrufbeantworter bzw. die Mailbox aufzusprechen.

In entsprechender Weise kann auch das Abfragen des Anrufbeantworters bzw. der Mailbox durchgeführt werden: Ruft der Inhaber der Mailbox seine Mailbox zwecks Abfrage eingegangener Audionachrichten ab, so wird ihm auf dem Bildschirm des zur Abfrage verwendeten Telekommunikationsendgerätes zusätzlich zu den abgespeicherten Audioinformationen beispielsweise das Datum, die Uhrzeit und der Name des Anrufers auf dem Bildschirm angezeigt.

Bevorzugt werden die Anzeige-Steuerbefehle in dem separaten Datenkanal in einer bildschirmorientierten Ansteuersprache übertragen. Beispielsweise kann als Ansteuersprache die WML-Sprache (WML: "Wireless Markup Language") oder die HTML-Sprache (HTML: Hyper-Text Markup Language) verwendet werden. Der WML-Standard stellt eine Untermenge des HTML-Standards dar.

Der WML-Standard bietet den Vorteil, dass dieser bezüglich der zur Definition von Bildschirminhalten erforderlichen Datenmenge sehr sparsam ist; mit dem WML-Standard können daher auch Telekommunikationsendgeräte betrieben werden, die in ihrer Datenkapazität eingeschränkt sind. Bei Telekommunikationsendgeräten mit großen Datenkapazitäten, insbesondere großen Speicherkapazitäten, ist die HTML-Bildschirmsprache empfehlenswert.

Besonders einfach und damit vorteilhaft lassen sich die Anzeige-Steuerbefehle im Datenkanal (z. B. D-Kanal) als User-to-User-Nachrichten übertragen, vorzugsweise nach der ETSI-Vorschrift ETS 300 102-1 Chapter 4.5.29 mit einem Protokoll-Diskriminator "0 = user specific".

Darüber hinaus wird es als vorteilhaft angesehen, wenn im separaten Datenkanal zusätzlich zu den Anzeige-Steuerbefehlen URL-Informationen (URL: Uniform Resource Locator) übertragen werden. URL-Informationen dienen dazu, bei einem Bildschirmaufbau nach dem Internetstandard die benutzerseitig jeweils nächste ausgewählte Bildschirmseite bzw. den jeweils nächsten gewünschten Display-Inhalt beim "Part-nergerät" anzufordern.

URL-Informationen können sowohl in der WML-Sprache als auch in der HTML-Sprache mit dem Tag "<a>" markiert werden. Auch die Anweisungen für das Hervorrufen automatischer Reaktionen beim Gesprächspartner sind bei der WML-Sprache und der HTML-Sprache weitgehend identisch, beispielsweise weisen die hierzu geeigneten Anweisungen "on-enter-forward" und "on-timer" große Übereinstimmungen auf.

Unter Umständen kann es vorkommen, dass die im separaten Datenkanal zu übertragenden Anzeige-Steuerbefehle einen größeren Umfang aufweisen, als in dem Datenkanal in einem einzigen Datenblock übertragen werden können. Beispielsweise besteht netzseitig durch die ETSI-Vorschrift ETS 300 239 eine Beschränkung der Größe einer User-to-User-Nachricht auf 32 Byte. Sowohl URL-Informationen als auch Anzeige-Steuerbefehle nach dem WML- bzw. HTML-Standard können diese 32 Byte-Größe überschreiten; um dennoch eine Übertragung der Anzeige-Steuerbefehle zu ermöglichen, werden die Anzeige-Steuerbefehle und/oder die URL-Informationen in mehrere Nachrichtenpakete aufgeteilt und diese in separaten User-to-User-Nachrichten einzeln übertragen.

Besonders einfach und damit vorteilhaft können der Anfang eines durch mehrere User-to-User-Nachrichten definierten Bildschirminhalts und das Ende des Bildschirminhalts erkannt werden, wenn entsprechende Start- und Endsequenzen übertragen werden. Bei einer Übertragung einer Display-Seite nach dem WML-Standard - also einer "WML-Seite" - kann der Seitenanfang durch das Tag "<wml>" oder das Tag "<?xml" in der ersten User-to-User-Nachricht und durch das Tag "</wml>" in der letzten User-to-User-Nachricht identifiziert werden. Bei einer Übertragung von Display-Inhalten mit der HTML-Sprache wird der Beginn einer HTML-Anzeigeseite entweder mit dem Tag "<html>" oder mit dem Tag "<?xml" definiert. Das Ende der HTML-Seite bzw. die Vollständigkeit der HTML-Seite wird mit dem Tag "</html>" angezeigt.

Beispielsweise kann eines der beteiligten Telekommunikationsgeräte eine automatische Reaktion des Partner-Telekommunikationsgerätes auslösen, indem es die Steuerbefehle "on-enter-forward" oder "on-timer" überträgt; handelt es sich bei dem Empfänger dieser Anweisung um ein Telekommunikationsgerät mit einem Bildschirm, so wird dieses als unmittelbare Antwort eine definierte URL-Anforderung zurücksenden, so dass das sendende Telekommunikationsgerät erkennt, dass die von ihm übermittelten Display-Inhalte am Partner-Telekommunikationsgerät dargestellt werden können.

Das beschriebene Verfahren eignet sich im Übrigen nicht nur für typische "Voicemail"-Applikationen, sondern für alle Anwendungen, bei denen zu unveränderten Audiosignalen Zusatzinformationen im Display des Partner-Telekommunikationsgerätes angezeigt werden sollen: Beispielsweise kann eine Anzeige von Musik-Titeln oder Musik-Interpreten bei Wartemusik ("music on hold") im Falle einer Warteschleife erfolgen.

Die Erfindung bezieht sich außerdem auf Anrufbeantworter . Diesbezüglich liegt der Erfindung die Aufgabe zugrunde, Anrufbeantworter anzugeben, mit denen eine besonders benutzerfreundliche und komfortable Telekommunikationsverbindung betrieben werden kann, die die Eigenschaften der beteiligten Telekommunikationsgeräte berücksichtigt.

Erfindungsgemäß sind Anrufbeantworter mit den Merkmalen gemäß Anspruch 11 vorgesehen. Vorteilhafte Ausgestaltungen der erfindungsgemäßen Anrufbeantworter sind in Unteransprüchen angegeben.

Bezüglich der Vorteile der erfindungsgemäßen Anrufbeantworter wird auf die obigen Ausführungen im Zusammenhang mit dem erfindungsgemäßen Verfahren verwiesen.

Zur Erläuterung der Erfindung zeigt eine Figur ein Ausführungsbeispiel einer Anordnung, anhand derer ein Ausführungsbeispiel des erfindungsgemäßen Verfahrens erläutert wird.

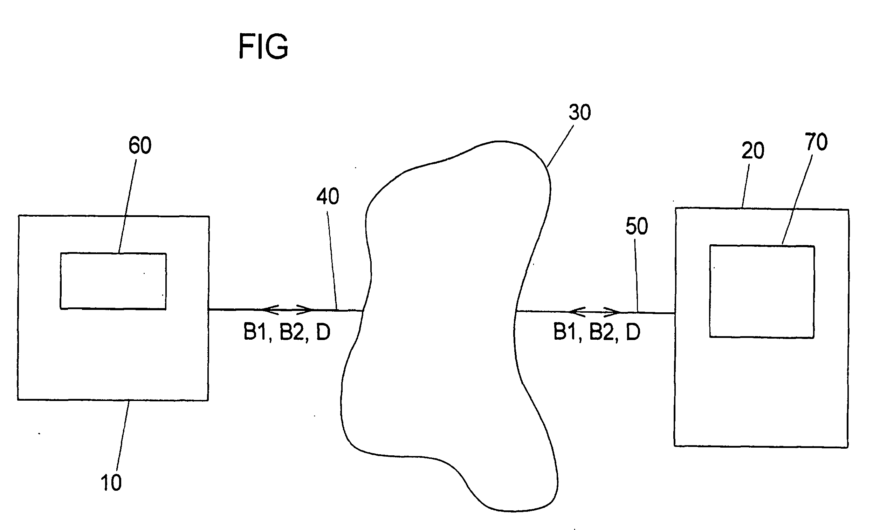

In der Figur 1 erkennt man zwei Telekömmunikationsendgeräte 10 und 20, die über ein öffentliches Telekommunikationsnetz 30 miteinander in Verbindung stehen.

Die beiden Telekommunikationsendgeräte 10 und 20 sind mit dem Telekommunikationsnetz 30 jeweils beispielsweise über eine UP0-, eine UK0- oder eine SO-Schnittstelle 40 und 50 verbunden. Über diese Schnittstellen 40 und 50 werden zwei Sprachkanäle B1 und B2 - nachfolgend B-Kanäle genannt- und ein von den beiden Sprachkanälen B1 und B2 separater Datenkanal - nachfolgend kurz D-Kanal genannt - übertragen.

Nach dem Verbindungsaufbau werden über einen der beiden B-Kanäle, beispielsweise über den B-Kanal B1, Sprachinformationen bzw. "Audiosignale" übertragen. Über den D-Kanal werden in an sich bekannter Weise die für den Verbindungsaufbau und das Aufrechterhalten der Verbindung erforderlichen "Verwaltungsdaten" übertragen.

Zusätzlich werden im D-Kanal Anzeige-Steuerbefehle übertragen, die auf einem Bildschirm 60 bzw. 70 des die jeweiligen Anzeige-Steuerbefehle empfangenden Telekommunikationsgeräts 10 bzw. 20 eine Anzeige bewirken. Die Anzeige-Steuerbefehle werden als User-to-User-Nachrichten gemäß ETSI-Vorschrift ETS 300 102/1 Kapitel 4.5.29 mit einem Protokoll-Diskriminator "0 = user specific" übertragen. Die Anzeige-Steuerbefehle werden vorzugsweise in einer bildschirmorientierten Ansteuersprache übertragen, beispielsweise im WML- oder im HTML-Standard.

Nachfolgend wird beispielhaft davon ausgegangen, dass es sich bei dem Telekommunikationsgerät 10 um einen Anrufbeantworter und bei dem Telekommunikationsgerät 20 um ein Telekommunikationsendgerät 20 handelt, das den Anrufbeantworter 10 anruft.

Der Anrufbeantworter 10 sendet nach dem Verbindungsaufbau an das Telekommunikationsgerät 20 zunächst den Befehl "ontoforward" oder "ontimer", der eine automatische Reaktion des Telekommunikationsendgerätes 20 auslöst.

Das Telekommunikationsendgerät 20 ist hierzu derart ausgestaltet, dass es nach dem Empfang des Befehls "ontoforward" oder "ontimer" eine Rückmeldung an den Anrufbeantworter 10 sendet, aus der hervorgeht, dass es eine Anzeigeeinrichtung bzw. einen Bildschirm - nämlich den Bildschirm 70 - zum Anzeigen von Display-Inhalten aufweist. Die Rückmeldung kann beispielsweise dadurch erfolgen, dass das Telekommunikationsendgerät 20 eine vorgegebene, beispielsweise mit dem Befehl des Telekommunikationsendgerätes 10 mitgesandte URL-Information zurücksendet.

Nach Erhalt der Rückmeldung des Telekommunikationsendgerätes 20 wird der Anrufbeantworter 10 den mit der URL-Information angeforderten Display-Inhalt an das Telekommunikationsendgerät 20 übersenden. Beispielsweise kann der Anrufbeantworter 10 den Namen des Inhabers des Anrufbeantworters, die jeweilige Uhrzeit, das Datum sowie im Falle eines Aufsprechens von Audiosignalen auf den Anrufbeantworter 10 die jeweils zur Verfügung stehende Restaufnahmezeit anzeigen.

Falls die Anzeige-Steuerbefehle zu umfangreich sind, als dass sie in einer einzigen User-to-User-Nachricht übertragen werden könnten, so werden die Anzeige-Steuerbefehle in Nachrichtenblöcke unterteilt und die Nachrichtenblöcke werden separat als User-to-User-Nachrichten übertragen.

### Bezugszeichenliste

- 10: Anrufbeantworter
- 20: Telekommunikationsendgerät
- 30: Telekommunikationsnetz
- 40, 50: Schnittstelle
- 60, 70: Bildschirm

## Patentansprüche

1. Verfahren zum Betreiben einer Kommunikationsverbindung zwischen einem Abrufbeantworter (10) und einem Telekommunikationsendgerät (20) mit einem Bildschirm, wobei bei dem Verfahren in einem vom Sprachkanal separaten Datenkanal (D) als Datensignale Anzeige-Steuerbefehle übertragen werden, die auf einem Bildschirm (70) des die Anzeige-Steuerbefehle empfangenden Telekommunikationsendgeräts (20) eine Anzeige bewirken,
**dadurch gekennzeichnet, dass**
- nach. Herstellung der Kommunikationsverbindung mit einem Anrufer des Anrufbeantworters in einem Sprachkanal (B1, B2) Sprachinformationen und in einem vom Sprachkanal separaten Datenkanal (D) Datensignale übertragen werden,
- wobei nach Verbindungsaufbau des Sprach- und des Datenkanals von dem Anrufbeantworter (10) ein Befehl zu dem Telekommunikationsendgerät (20) übertragen wird, der eine derartige automatische Reaktion des Telekommunikationsendgerätes (10) auslöst, dass dieses einen vorgegebenen Displayinhalt von dem Anrufbeantworter (10) anfordert, und
- wobei nach Anforderung des Displayinhalts der Anrufbeantworter (10) den angeforderten Displayinhalt an das Telekommunikationsendgerät (20) übermittelt.

2. Verfahren nach Anspruch 1, **dadurch gekennzeichnet,**
- **dass** mit dem die automatische Reaktion auslösenden Befehl des Anrufbeantworters (10) eine Information, insbesondere eine URL-Information, übermittelt wird, die eine Display-seite des Anrufbeantworters (10) bezeichnet, die das Telekommunikationsendgerät (20) aufrufen soll, und
- **dass** das Telekommunikationsendgerät (20) mit der Anforderung des Displayinhalts diese Information zurücksendet.

3. Verfahren nach Anspruch 1 oder 2, **dadurch gekennzeichnet, dass** auf dem Display des den Anrufbeantworter (10) anrufenden Telekommunikationsendgerätes (20) die jeweils zur Verfügung stehende Restaufnahmezeit angezeigt wird, die dem Anrufer zum Aufsprechen einer Audionachricht noch zur Verfügung steht.

4. Verfahren nach Anspruch 1, 2 oder 3, **dadurch gekennzeichnet, dass** der Anrufbeantworter durch eine netzbetreiberseitig bereitgestellte Mailbox-Funktion gebildet ist.

5. Verfahren nach einem der vorangehenden Ansprüche, **dadurch gekennzeichnet, dass** die Anzeige-Steuerbefehle in dem Datenkanal in einer bildschirmorientierten Ansteuersprache übertragen werden.

6. Verfahren nach Anspruch 5, **dadurch gekennzeichnet, dass** als Ansteuersprache die WML-Sprache verwendet wird.

7. Verfahren nach Anspruch 5, **dadurch gekennzeichnet, dass** als Ansteuersprache die HTML-Sprache verwendet wird.

8. Verfahren nach einem der vorangehenden Ansprüche, **dadurch gekennzeichnet, dass** die Anzeige-Steuerbefehle als User-to-User-Nachrichten gemäß ETSI-Vorschrift ETS 300 102/1 Kapitel 4.5.29 mit Protokoll-Diskriminator "0 = user specific" übertragen werden.

9. Verfahren nach einem der vorangehenden Ansprüche, **dadurch gekennzeichnet, dass** die Anzeige-Steuerbefehle in Nachrichtenblöcke unterteilt werden und die Nachrichtenblöcke separat übertragen werden.

10. Verfahren nach Anspruch 9, **dadurch gekennzeichnet, dass** die Nachrichtenblöcke in separaten User-to-User-Nachrichten übertragen werden.

11. Anrufbeantworter (10), der geeignet ist, in einem vom Sprachkanal separaten Datenkanal (D) Anzeige-Steuerbefehle zu übertragen, die auf einem Bildschirm (70) eines die Anzeige-Steuerbefehle empfangenden Telekommunikationsendgeräts (20) eine Anzeige bewirken, **dadurch gekennzeichnet, dass**
- der Anrufbeantworter (10) zur Durchführung eines Verfahrens nach einem der Ansprüche 1 bis 10 geeignet ist und nach Herstellung der Kommunikationsverbindung mit einem Anrufer des Anrufbeantworters in einem Sprachkanal (B1, B2) Sprachinformationen und in einem vom Sprachkanal separaten Datenkanal (D) Datensignale überträgt,
- wobei der Anrufbeantworter nach Herstellung der Kommunikationsverbindung über den separaten Datenkanal (D) zu dem Telekommunikationsendgerät (20) einen Befehl überträgt, der geeignet ist, eine Anforderung eines Displayinhalts als automatische Reaktion des Telekommunikationsendgerätes (20) auszulösen.

12. Anrufbeantworter nach Anspruch 11, **dadurch gekennzeichnet**, der Anrufbeantworter mit dem die automatische Reaktion auslösenden Befehl eine Information, insbesondere eine URL-Information, übermittelt, die eine Displayseite des Anrufbeantworters (10) bezeichnet, die das Telekommunikationsendgerät (20) aufrufen soll.

13. Anrufbeantworter nach einem der vorangehenden Ansprüche 11 bis 12, **dadurch gekennzeichnet, dass** der Anrufbeantworter (10) auf dem Display des den Anrufbeantworter anrufenden Telekommunikationsendgerätes (20) die jeweils zur Verfügung stehende Restäufnahmezeit anzeigt, die dem Anrufer zum Aufsprechen einer Audionachricht noch zur Verfügung steht.

14. Anrufbeantworter nach einem der voranstehenden Ansprüche 11 bis 13, **dadurch gekennzeichnet, dass** der Anrufbeantworter (10) durch eine netzbetreiberseitig bereitgestellte Mailbox-Funktion gebildet ist.

15. Anrufbeantworter nach einem der vorangehenden Ansprüche 11 bis 14, **dadurch gekennzeichnet, dass** die Anzeige-Steuerbefehle in dem Datenkanal (D) in einer bildschirmorientierten Ansteuersprache übertragen werden.

16. Anrufbeantworter nach Anspruch 15, **dadurch gekennzeichnet, dass** als Ansteuersprache die WML-Sprache verwendet wird.

17. Anrufbeantworter nach Anspruch 15, **dadurch gekennzeichnet, dass** als Ansteuersprache die HTML-Sprache verwendet wird.

18. Anrufbeantworter nach einem der vorangehenden Ansprüche 11 bis 17, **dadurch gekennzeichnet, dass** er die Anzeige-Steuerbefehle als User-to-User-Nachrichten gemäß ETSI-Vorschrift ETS 300 102/1 Kapitel 4.5.29 mit Protokoll-Diskriminator "0 = user specific" überträgt oder empfängt.

19. Anrufbeantworter nach einem der vorangehenden Ansprüche 11 bis 18, **dadurch gekennzeichnet, dass** er die Anzeige-Steuerbefehle in Nachrichtenblöcke unterteilt und die Nachrichtenblöcke separat überträgt.

20. Anrufbeantworter Anspruch 19, **dadurch gekennzeichnet, dass** die Nachrichtenblöcke separaten User-to-User-Nachrichten zugeordnet werden.

## Claims

1. Method for operating a communication link between a call answering device (10) and a telecommunications terminal (20) having a screen, for which method display control commands which trigger a display on a screen (70) of the telecommunications terminal (20) receiving the display control commands are transmitted as data signals in a data channel (D) separate from the voice channel,
**characterised in that**
- after establishing the communication link to a caller of the call answering device, voice information is transmitted in a voice channel (B1, B2) and data signals are transmitted in a data channel (D) separate from the voice channel,
- after setting up the connection of the voice channel and data channel, a command is transmitted from the call answering device (10) to the telecommunications terminal (20) which triggers an automatic response from the telecommunications terminal (10) such that the latter requests a predefined display content from the call answering device (10), and
- after requesting the display content, the call answering device (10) transmits the requested display content to the telecommunications terminal (20).

2. Method as claimed in claim 1, **characterised in that**
- information, in particular URL information, designating a display page of the call answering device (10) which the telecommunications terminal (20) should call up is transmitted with the command from the call answering device (10) triggering the automatic response, and
- the telecommunications terminal (20) sends back this information with the request for the display content.

3. Method as claimed in claim 1 or 2, **characterised in that** the remaining recording time respectively available, which is still available to the caller for recording an audio message, is displayed on the display of the telecommunications terminal (20) calling the call answering device (10).

4. Method as claimed in claim 1, 2 or 3, **characterised in that** the call answering device is a mailbox function provided by a network operator.

5. Method as claimed in one of the preceding claims, **characterised in that** the display control commands are transmitted in the data channel in a screen-oriented markup language.

6. Method as claimed in claim 5, **characterised in that** the WML language is used as the markup language.

7. Method as claimed in claim 5, **characterised in that** the HTML language is used as the markup language.

8. Method as claimed in one of the preceding claims, **characterised in that** the display control commands are transmitted as user-to-user messages conforming to the ETSI standard ETS 300 102/1 Chapter 4.5.29 with a protocol discriminator "0 = user specific".

9. Method as claimed in one of the preceding claims, **characterised in that** the display control commands are divided into message blocks and the message blocks are transmitted separately.

10. Method as claimed in claim 9, **characterised in that** the message blocks are transmitted in separate user-to-user messages.

11. Call answering device (10) suitable for transmitting, in a data channel (D) separate from the voice channel, display control commands which trigger a display on a screen (70) of a telecommunications terminal (20) receiving the display control commands,
**characterised in that**
- the call answering device (10) is suitable for implementing a method as claimed in one of claims 1 to 10 and, after establishing the communication link to a caller of the call answering device, transmits voice information in a voice channel (B1, B2) and data signals in a data channel (D) separate from the voice channel,
- after establishing the communication link, the call answering device transmits to the telecommunications terminal (20) via the separate data channel (D) a command suitable for triggering a request for a display content as an automatic response of the telecommunications terminal (20).

12. Call answering device as claimed in claim 11, **characterised in that** the call answering device transmits information with the command triggering the automatic response, in particular URL information, designating a display page of the call answering device (10) which the telecommunications terminal (20) should call up.

13. Call answering device as claimed in one of preceding claims 11 to 12, **characterised in that** the call answering device (10) displays on the display of the telecommunications terminal (20) calling the call answering device the remaining recording time respectively available, which is still available to the caller for recording an audio message.

14. Call answering device as claimed in one of preceding claims 11 to 13, **characterised in that** the call answering device (10) is a mailbox function provided by a network operator.

15. Call answering device as claimed in one of preceding claims 11 to 14, **characterised in that** the display control commands are transmitted in the data channel (D) in a screen-oriented markup language.

16. Call answering device as claimed in claim 15, **characterised in that** the WML language is used as the markup language.

17. Call answering device as claimed in claim 15, **characterised in that** the HTML language is used as the markup language.

18. Call answering device as claimed in one of preceding claims 11 to 17, **characterised in that** it transmits or receives the display control commands as user-to-user messages conforming to the ETSI standard ETS 300 102/1 Chapter 4.5.29 with a protocol discriminator "0 = user specific".

19. Call answering device as claimed in one of preceding claims 11 to 18, **characterised in that** it divides the display control commands into message blocks and transmits the message blocks separately.

20. Call answering device as claimed in claim 19, **characterised in that** the message blocks are allocated to separate user-to-user messages.

## Revendications

1. Procédé pour faire fonctionner une liaison de communication entre un répondeur (10) et un terminal de télécommunication (20) doté d'un écran, procédé dans lequel des instructions de contrôle d'affichage sont transmises dans un canal de données (D) séparé du canal vocal sous la forme de signaux de données et provoquent un affichage sur un écran (70) du terminal de télécommunication (20) qui reçoit les instructions de contrôle d'affichage,
**caractérisé en ce que**
- après l'établissement de la liaison de communication avec un appelant du répondeur, des informations vocales sont transmises dans un canal vocal (B1, B2) et des signaux de données sont transmis dans un canal de données (D) séparé du canal vocal,
- dans lequel, après l'établissement de la connexion du canal vocal et du canal de données, le répondeur (10) transmet au terminal de télécommunication (20) une instruction qui déclenche une réaction automatique du terminal de télécommunication (10) telle que celui-ci demande au répondeur (10) un contenu d'affichage prédéfini, et
- dans lequel, suite à la demande du contenu d'affichage, le répondeur (10) transmet le contenu d'affichage demandé au terminal de télécommunication (20).

2. Procédé selon la revendication 1, **caractérisé**
- **en ce que** l'instruction déclenchant la réaction automatique du répondeur (10) entraîne la transmission d'une information, en particulier une information URL, qui décrit une page d'affichage du répondeur (10) que le terminal de télécommunication (20) doit appeler, et
- **en ce que** le terminal de télécommunication (20) renvoie cette information avec la demande du contenu d'affichage.

3. Procédé selon la revendication 1 ou la revendication 2, **caractérisé en ce que** l'afficheur du terminal de télécommunication (20) qui appelle le répondeur (10) affiche le temps d'enregistrement restant respectivement disponible dont l'appelant dispose encore pour dicter un message audio.

4. Procédé selon la revendication 1, la revendication 2 ou la revendication 3, **caractérisé en ce que** le répondeur est formé par une fonction boîte aux lettres mise à disposition par l'exploitant du réseau.

5. Procédé selon l'une des revendications précédentes, **caractérisé en ce que** les instructions de contrôle d'affichage sont transmises dans le canal de données dans un langage de commande orienté écran.

6. Procédé selon la revendication 5, **caractérisé en ce que** le langage de commande utilisé est le langage WML.

7. Procédé selon la revendication 5, **caractérisé en ce que** le langage de commande utilisé est le langage HTML.

8. Procédé selon l'une des revendications précédentes, **caractérisé en ce que** les instructions de contrôle d'affichage sont transmises sous la forme de messages d'usager à usager selon la norme ETSI ETS 300 102/1 chapitre 4.5.29 avec discriminateur de protocole "0 = user specific".

9. Procédé selon l'une des revendications précédentes, **caractérisé en ce que** les instructions de contrôle d'affichage sont subdivisées en blocs de message et **en ce que** les blocs de message sont transmis séparément.

10. Procédé selon la revendication 9, **caractérisé en ce que** les blocs de message sont transmis dans des messages d'usager à usager séparés.

11. Répondeur (10) adapté pour transmettre dans un canal de données (D) séparé du canal vocal des instructions de contrôle d'affichage qui provoquent un affichage sur un écran (70) d'un terminal de télécommunication (20) qui reçoit les instructions de contrôle d'affichage,
**caractérisé en ce que**
- le répondeur (10) est adapté pour exécuter un procédé selon l'une des revendications 1 à 10 et, après l'établissement de la liaison de communication avec un appelant du répondeur, il transmet des informations vocales dans un canal vocal (B1, B2) et des signaux de données dans un canal de données (D) séparé du canal vocal,
- dans lequel, après l'établissement de la liaison de communication, le répondeur transmet au terminal de télécommunication (20), par le biais du canal de données (D) séparé, une instruction adaptée pour déclencher une demande de contenu d'affichage sous la forme d'une réaction automatique du terminal de télécommunication (20).

12. Répondeur selon la revendication 11, **caractérisé en ce que**, avec l'instruction déclenchant la réaction automatique, le répondeur transmet une information, en particulier une information URL, qui décrit une page d'affichage du répondeur (10) que le terminal de télécommunication (20) doit appeler.

13. Répondeur selon l'une des revendications 11 à 12 précédentes, **caractérisé en ce que** le répondeur (10) affiche sur l'afficheur du terminal de télécommunication (20) qui appelle le répondeur le temps d'enregistrement restant respectivement disponible dont l'appelant dispose encore pour dicter un message audio.

14. Répondeur selon l'une des revendications 11 à 13 précédentes, **caractérisé en ce que** le répondeur (10) est formé par une fonction boîte aux lettres mise à disposition par l'exploitant du réseau.

15. Répondeur selon l'une des revendications 11 à 14 précédentes, **caractérisé en ce que** les instructions de contrôle d'affichage sont transmises dans le canal de données (D) dans un langage de commande orienté écran.

16. Répondeur selon la revendication 15, **caractérisé en ce que** le langage de commande utilisé est le langage WML.

17. Répondeur selon la revendication 15, **caractérisé en ce que** le langage de commande utilisé est le langage HTML.

18. Répondeur selon l'une des revendications 11 à 17 précédentes, **caractérisé en ce qu'**il transmet ou reçoit les instructions de contrôle d'affichage sous la forme de messages d'usager à usager suivant la norme ETSI ETS 300 102/1 chapitre 4.5.29 avec discriminateur de protocole "0 = user specific".

19. Répondeur selon l'une des revendications 11 à 18 précédentes, **caractérisé en ce qu'**il subdivise les instructions de contrôle d'affichage en blocs de message et transmet les blocs de message séparément.

20. Répondeur selon la revendication 19, **caractérisé en ce que** les blocs de message sont affectés à des messages d'usager à usager séparés.
